# EUROPEAN PATENT APPLICATION

(11) **EP 4 033 188 A1**
(43) Date of publication of application: **27.07.2022**
(21) Application number: 21305066.9
(22) Date of filing: 20.01.2021
(51) Int. Cl.: F27B 15/10, C04B 11/028, F27B 15/14, F27D 7/02

(54) **INDUSTRIAL CALCINATION APPARATUS**

(71) Applicant: SAINT-GOBAIN PLACO, 92400 Courbevoie (FR)
(72) Inventor: WOOLLACOTT, Rob, LE12 6JS East Leake (GB)
(74) Representative: Murgitroyd & Company

(57) **Abstract**

The present application describes an industrial calciner for particulate material, wherein the industrial calciner comprises: a calcination vessel; and a gas supply system in fluid communication with the calcination vessel, the gas supply system configured to supply a flow of calcination gas to the calcination vessel, wherein the industrial calciner further comprises at least one electric heater configured to heat the calcination gas. Use of the industrial calciner and a method of calcining particulate material with the industrial calciner are also described.

## Description

### FIELD OF THE INVENTION

The present invention relates to an industrial calciner for particulate material. More specifically, the invention relates to an industrial calciner comprising an electric heater. The invention also relates to the use of the industrial calciner and a method of calcining particulate material with the industrial calciner.

### BACKGROUND TO THE INVENTION

Gypsum construction panels, often referred to as plasterboards, are commonly used in the provision of internal walls and ceilings within buildings. Whilst the major component of these construction panels is gypsum, also known as calcium sulphate dihydrate CaSO₄ 2(H₂O), it is well known to include additives such as fibres, starches and synthetic polymers amongst others to modify the chemical and mechanical properties of the gypsum board.

Typically, gypsum board is formed from a stucco slurry. Here, stucco (calcium sulphate hemihydrate, CaSO₄ 0.5(H₂O)) and other additives are combined with water to form the stucco slurry. The water within the slurry hydrates the stucco to form gypsum, and the gypsum slurry is dried at an elevated temperature to form the gypsum board. The gypsum board may have one or more facings, such as a paper sheet, although facings are not always used or desired. In general, plaster products are formed by hydrating calcium sulphate hemihydrate and subsequently drying the mixture, or allowing the mixture to dry naturally, to provide a gypsum product, skim or layer.

As such, there is a need to provide calcium sulphate hemihydrate for use in the manufacture of plasterboards, powders and other products.

Currently, the industrial production of calcium sulphate hemihydrate relies on burners, most usually gas burners, and combustion processes to provide thermal energy for calcination of gypsum to produce calcium sulphate hemihydrate. Here, a combustion process within a burner supplies heated air to the particulate matter for calcination.

It is desirable to closely control the calcination process, in particular the humidity and temperature of the calcination environment, as variations in the calcination conditions can lead to significant changes in the properties of the calcined particles, and consequently the properties of the gypsum board produced. Additionally, the calcination process is relatively energy intensive, and it is desirable to reduce the energy required to produce calcium sulphate hemihydrate from the raw gypsum.

As such, there is a desire to increase the controllability of the calcination process, and to further reduce the energy required to calcine raw gypsum. Objects and aspects of the present invention seek to address at least one of these problems.

### SUMMARY OF THE INVENTION

According to the first aspect of the present invention, there is provided an industrial calciner for particulate material, wherein the industrial calciner comprises: a calcination vessel; and a gas supply system in fluid communication with the calcination vessel, the gas supply system configured to supply a flow of calcination gas to the calcination vessel, wherein the industrial calciner further comprises at least one electric heater configured to heat the calcination gas.

In this way, there is provided an industrial calciner that can more closely control the calcination conditions. Optimised conditions, such as temperature, humidity, airflow and pressure, are critical to ensure the calcination process is efficient and that desired characteristics of the calcined particulate matter are achieved. Where the thermal energy required for calcination is provided by traditional combustion methods using liquid and gaseous fuels, it is challenging to control the calcination conditions experienced by the particulate material within the calcination vessel, especially during the transient operating phases of start-up and shut down. The combustion temperature within these burners can vary depending on the precise combustion mixture within the burner, and the temperature may drift from a desired value over time, potentially due to a build-up of combustion products within the burner.

Additionally, to maintain combustion within the burner it is necessary to continuously supply fresh air and fuel to the burner. Therefore, a significant amount of energy in these burner based systems is wasted heating this fresh air and the combustion fuel, rather than calcining the particulate material. The fresh air requirement is greatly reduced in systems using an electric heater, resulting in increased efficiency. Further, a net reduction in the fresh ambient air provided to the calcination process enables increased recirculation of humidified air within the industrial calciner as well as a reduction in unwanted exhaust emissions. Furthermore, the absence of a combustion process may be advantageous as this eliminates the need to heat any combustion products to maintain the calcination gas at a desired temperature. Additionally, the use of an electric heater may provide a more even temperature profile both over time and across the cross section of the calcination system.

Improved temperature homogeneity, in particular of the calcination gas entering the calcination vessel, and controlled humidity of the calcination conditions within the calcination vessel allows the industrial calciner to operate over both a wider temperature and wider humidity range. Additionally, the use of an electric heater also improves the characteristics of the calcined particles. As mentioned above, the use of an electric heater allows for improved control and precision of the calcination conditions, allowing the particle size of the gypsum introduced to the calcination vessel to be optimised as well as a reduction in under-calcination and over-calcination of particulate matter to be achieved.

The calcination gas comprises air. More preferably, the calcination gas consists of air.

An industrial calciner is one that is capable of calcining at least four tons of particulate matter per hour. The production of calcined particles on this scale is only seen in specialist manufacturing plants, and such large scale processing has different technical characteristics to any lab-based research based processes, or small batch production processes. Preferably, the industrial calciner is configured such that it may continuously calcine particulate material. Such a feature may be advantageous as it may provide a continuous calcination process.

Preferably, the at least one electric heater is located within the gas supply system. Preferably, the calcination vessel comprises a grinder for reducing the size of the particulate material. This is advantageous in that there may be a reduction in the preprocessing requirements of the raw material, such as providing pre-ground raw gypsum.

Preferably, the gas supply system comprises a heat exchanger and/or heat pump configured to extract heat energy from the calcination gas leaving the calcination vessel. More preferably, the heat exchanger and/or heat pump is configured to heat at least a portion of the calcination gas before it enters the calcination vessel. This feature may be advantageous as it may allow thermal energy in the industrial calciner to be recovered and re-used. In this way, the efficiency of the calcination process is increased.

Preferably, the industrial calciner comprises a heating control system for controlling the output of the at least one electric heater. Preferably, the heating control system comprises at least one temperature sensor. Preferably, the temperature sensor is located within the industrial calciner. More preferably, the heating control system will comprise a computer processor configured to control the at least one electric heater to maintain a heating parameter within a desired range. The heating parameter may comprise the electric current supplied to the electric heater, the electrical resistance of an element within the electric heater, the time period for which electrical power is supplied to the electric heater and/or the time period for which electrical power is not supplied to the electric heater, amongst others.

Preferably, the desired range may be predetermined. Alternatively, the desired range may be selected by a user. More preferably, the desired range may change over time. Still more preferably, the change over time is cyclical. It is envisaged that the desired range may comprise a range of values, or be a single value. Preferably, the heating control system is configured to issue an alert if the heating parameter falls outside the desired range. More preferably, the heating control system is configured to issue an alert if the heating parameter falls outside the desired range for more than a specified length of time. This specified length of time may be predetermined or selected by the user. Preferably, the alert comprises an audible alert. Preferably, the alert comprises a visual alert. Preferably, the issuance of an alert is recorded within the heating control system.

Preferably, the heating control system comprises a plurality of temperature sensors. Preferably, the plurality of temperature sensors is located within the industrial calciner. More preferably, temperature sensors within the plurality of temperature sensors are located at separate, distinct locations with the industrial calciner. Preferably, the heating control system is configured to control the at least one electrical heater in response to the measurement of at least one temperature sensor. For example, the control system may modify the operation of at least one electric heater if the temperature measured by one or more temperature sensors falls outside of a desired range as hereinbefore described.

Preferably, the heating control system comprises at least one temperature sensor located, in use, with an exhaust airflow of the industrial calciner. The at least one temperature sensor within the exhaust airflow may allow the temperature within the industrial calciner to be determined indirectly.

Preferably, the industrial calciner further comprises at least one humidity modifier. More preferably, the industrial calciner comprises a humidity control system for controlling the output of the at least one humidity modifier. Preferably, the humidity control system comprises at least one humidity sensor. Preferably, the humidity sensor is located within the industrial calciner. Preferably, the humidity control system is configured to independently control the output of each of the at least one humidity modifier.

Preferably, the humidity modifier can increase the humidity within the industrial calciner. Preferably, the humidity generator can reduce the humidity within the industrial calciner. More preferably, the humidity modifier can increase or reduce the humidity within the industrial calciner.

It is advantageous to control the humidity within the industrial calciner, particularly during the transient operating phases of start-up and shut down, as controlling the humidity inside the industrial calciner allows the calcination conditions to be adjusted to vary the properties of the calcined particles, and consequently the properties of the gypsum board produced.

Preferably, the humidity control system comprises a computer processor configured to control the humidity modifier to maintain a humidity parameter within a desired range. The humidity parameter may comprise the rate of steam and/or water vapour introduction into the industrial calciner, the rate of steam and/or water vapour removal from the industrial calciner, the time period for which steam and/or water vapour is introduced into the industrial calciner and/or the time period for which steam and or water vapour is removed from into the industrial calciner, amongst others.

Preferably, the desired range may be predetermined. Alternatively, the desired range may be selected by a user. More preferably, the desired range may change over time. Still more preferably, the change over time is cyclical. It is envisaged that the desired range may comprise a range of values, or be a single value. Preferably, the humidity control system is configured to issue an alert if the humidity parameter falls outside the desired range. More preferably, the heating control system is configured to issue an alert if the humidity parameter falls outside the desired range for more than a specified length of time. This specified length of time may be predetermined or selected by the user. Preferably, the alert comprises an audible alert. Preferably, the alert comprises a visual alert. Preferably, the issuance of an alert is recorded within the humidity control system.

Preferably, the humidity control system comprises a plurality of humidity sensors. Preferably, the plurality of humidity control sensors is located within the industrial calciner. More preferably, humidity sensors within the plurality of humidity sensors are located at separate, distinct locations with the industrial calciner. Preferably, the humidity control system is configured to control the at least one humidity modifier in response to the measurement of at least one humidity sensor. For example, the control system may modify the water vapour and/or steam output of at least one humidity modifier if the humidity measured by one or more humidity sensors falls outside of a desired range as hereinbefore described.

Preferably, the humidity control system comprises at least one humidity sensor located, in use, with an exhaust airflow of the industrial calciner. The at least one humidity sensor within the exhaust airflow may allow the humidity within the industrial calciner to be determined indirectly.

Where the industrial calciner comprises a plurality of temperature and/or humidity sensors, this may advantageously allow the temperature and/or humidity of the industrial calciner to be more finely controlled with the industrial calciner. Additionally, where a plurality of sensors are used, it may be advantageous to provide different temperatures and/or a different humidity in different areas of the industrial calciner to control more closely the final properties of the gypsum board. In this way, the humidity of the industrial calciner can be monitored and adjusted to provide the desired calcination conditions, including during the transient operating phases of start-up and shut down.

Preferably, the industrial calciner comprises a pressure control system for controlling the pressure within the industrial calciner. Preferably, the pressure control system comprises at least one pressure sensor. Preferably, the at least one pressure sensor is located within the industrial calciner. Preferably, the industrial calciner is configured to control the pressure control system in response to the measurement of at least one pressure sensor.

Preferably, the industrial calciner comprises an airflow control system for controlling the airflow through the industrial calciner. Preferably, the airflow control system comprises at least one airflow sensor. Preferably, the airflow sensor is located within the industrial calciner. Preferably, the airflow control system is configured to control the airflow through the industrial calciner in response to the measurement of the at least one airflow sensor.

The use of an electric heater allows the majority of the air to be recirculated within the industrial calciner, with only a moderate amount of fresh air introduced into the apparatus. As such, the control systems in the present apparatus can maintain and adjust conditions within the industrial calciner more rapidly and with more accuracy than any present in a burner based systems.

Preferably, the industrial calciner further comprises a filter unit, wherein the filter unit is configured to remove calcined particulate matter from the calcination gas. Preferably, the industrial calciner is configured to recirculate at least a portion of the calcination gas. The recirculation feature may be advantageous as it may allow the calcination gas heated by the electric heaters in the gas supply system to be recovered and re-used. In this way, the efficiency of the calcination process is increased. Additionally, the use of a filter unit may be preferable when at least a portion of the calcination gas is recirculated. The use of a filter in such embodiments may increase the lifespan of components within the industrial calciner and reduce the long-term costs of operating the apparatus.

Preferably, the industrial calciner comprises a supplementary electric heater. The presence of a supplementary electric heater in the industrial calciner allows the temperature of the recovered gas to be increased, improving its potential for re-use within the industrial calciner. Such a recovery process is not feasible with traditional burner based systems due to the remote location of the burner, combustion safety requirements and the complexity of the system purge sequence. Heating the recovered gas with a supplementary electric heater can improve evaporative capacity, avoid unwanted condensation within the industrial calciner, prevent a quality issue with the calcined particulate matter and/or provide a fail-safe in case of an interruption in the source of recovered air.

Preferably, the industrial calciner comprises a plurality of electric heaters. More preferably, each electric heater of the plurality of electric heaters is controlled independently. In this way, there may be increased precision and control of the calcination gas temperature. Preferably, the industrial calciner comprises at least one valve for controlling the passage of fluid within the industrial calciner. More preferably, valves within the plurality of valves are located at separate, distinct locations with the industrial calciner.

Preferably, the gas supply system comprises a fresh air source.

According to a second aspect of the present invention, there is provided the use of the industrial calciner as hereinbefore described to calcine particulate material.

According to a third aspect of the present invention, there is provided a method of calcining particulate material, the method comprising the steps of: providing the industrial calciner as hereinbefore described; providing gypsum; placing the gypsum into the calcination vessel; exposing the particulate material to heat from the at least one electric heater; and calcining the particulate material.

Preferably, the method further comprises the step of maintaining the water vapour level in the calcination vessel at or above 0.3 kg vapour per kg of air. More preferably, the method further comprises the step of maintaining the water vapour level in the calcination vessel at or above 0.4 kg vapour per kg of air.

It is to be understood that each and/or any feature and/or advantage associated with the first aspect of the present invention may also be included and/or apply to each and/or both of the second and third aspects of the present invention.

### DETAILED DESCRIPTION

Embodiments of the present invention will now be described by way of example only and with reference to the accompanying drawings, in which:

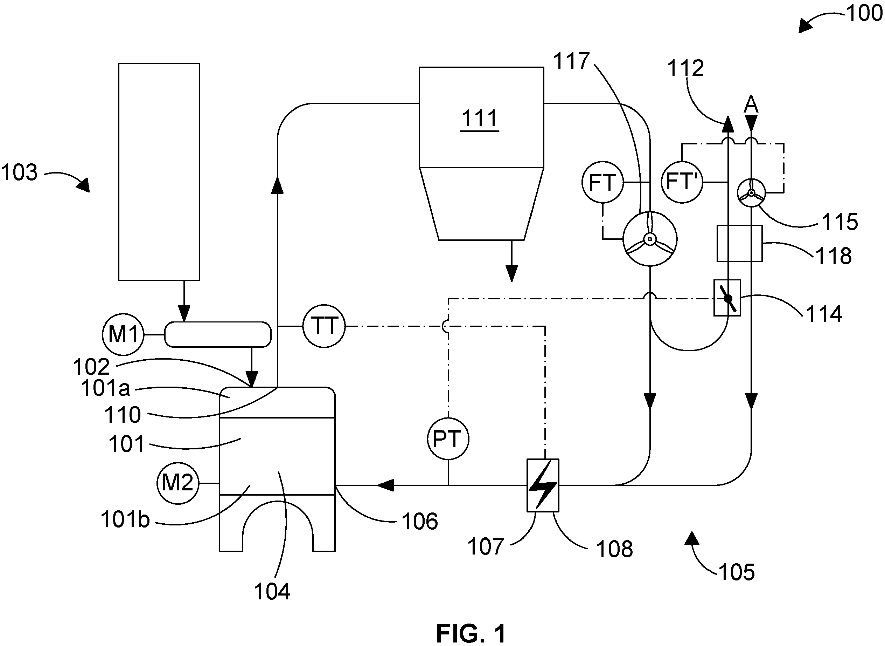

Figure 1 is a diagram of an industrial calciner in accordance with the first aspect of the present invention.

With reference to Figure 1, there is illustrated an industrial calciner 100 for particulate material comprising a calcination vessel 101. In the following description, the industrial calciner 100 is illustrated for use with raw gypsum for the production of calcium sulphate hemihydrate, a principle component in gypsum boards and panels. However, it is envisaged that the particulate matter to be calcined is not particularly limited.

The calcination vessel 101 comprises an upper portion with a particulate inlet 102 at a first end 101a and a cylindrical portion at a second end 101b. It is envisaged, that in further embodiments, the upper portion may be frustoconical. The industrial calciner 100 further comprises a feed-in unit 103 arranged to feed particulate material into the calcination vessel 101. The feed-in unit 103 is located at the first end 101a of the calcination vessel 101. The feed-in unit 103 comprises an inlet for deposition of particulate material, such as gypsum, into the feed-in unit 103 and a feeder for feeding the particulate material into the calcination vessel 101 via the particulate inlet 102. It is envisaged that the feeder may be any suitable feeder, for example a chain feeder or a weigh belt feeder.

The feed-in unit 103 comprises a first motor M1 and a particulate feed-in control system for controlling the rate of particulate material feed-in of the feed-in unit 103. In this way, the speed of deposition of particulate matter into the calcination vessel 101 can be controlled.

The calcination vessel 101 comprises a grinder 104, located at the second end 101 b of the calcination vessel 101, for reducing the size of the particulate material. The grinder 104 comprises a grinder motor M2 and a grinding control system for controlling the rate of grinding of the particulate material. In this way, the rate of grinding and consequently the size of the particulate material within the calcination vessel 101 can be controlled.

The industrial calciner 100 further comprises a gas supply system 105 in fluid communication with the calcination vessel 101. The calcination vessel 101 comprises a fluid inlet 106 located at the second end 101b of the calcination vessel 101. The gas supply system 105 is configured to supply a flow of calcination gas to the calcination vessel 101 via the fluid inlet 106.

The gas supply system 105 comprises a heating vessel 107 and an air inlet A. The air inlet A is in fluid communication with the heating vessel 107 and is arranged to supply ambient air to the heating vessel 107 from a fresh air source. The gas supply system 105 further comprises a first fan 115 for assisting flow of air via the air inlet A into the heating vessel 107.

The industrial calciner 100 comprises a plurality of electric heaters 108 configured to heat the calcination gas. The plurality of electric heaters 108 are located within the heating vessel 107 of the gas supply system 105. The calcination gas is formed in the heating vessel 107 and comprises air supplied via the air inlet A that is heated by the plurality of electric heaters 108.

In this embodiment, raw gypsum deposited into the feed-in unit 103 is fed into the calcination vessel 101 and is subsequently ground by the grinder 104 to reduce the size of the gypsum particles. The ground gypsum is thus located at the second end 101b of the calcination vessel 101. Calcination gas is then supplied to the calcination vessel 101 from the gas supply system 105 via the fluid inlet 106, such that the calcination vessel 101 contains both the ground gypsum and the heated calcination gas. In this way, the particulate material is exposed to heat from the plurality of electric heaters 108 via the heated gas.

The process of heating the ground gypsum with the calcination gas calcines the gypsum such that calcium sulphate hemihydrate is formed in the calcination vessel 101. This process results in calcined particulate matter being mixed in the calcination gas within the calcination vessel 101. The calcination gas, comprising calcined particulate matter, then rises to the first end 101a of the calcination vessel 101 under thermodynamic principles.

The calcination vessel 101 is in fluid communication with a filter unit 111 that is configured to remove calcined particulate matter from the calcination gas. The calcination vessel 101 comprises a fluid outlet 110 located at the first end 101a, and the calcination gas exits the calcination vessel 101 via the fluid outlet 110. The calcination gas then passes through the filter unit 111, wherein the calcium sulphate hemihydrate particles are removed from the calcination gas. In this way, the calcined gypsum can be collected from the industrial calciner 100 for further use.
The industrial calciner 100 is configured to recirculate at least a portion of the calcination gas. The filter unit 111 is in fluid communication with the gas supply system 105 such that calcination gas exiting the filter unit 111 after extraction of the calcined gypsum can re-enter the gas supply system 105. The recirculated calcination gas reenters the heating vessel 107 and mixes with the calcination gas entering the heating vessel 107 via the air inlet A. As such, there is a lower quantity of air from the air inlet A demanded by the industrial calciner 100 due to the recirculation of gas previously used in the calcination process. The plurality of electric heaters 108 heat the mix of inlet gas and recirculated gas within the heating vessel 107 to the desired temperature. The industrial calciner 100 is configured such that it may continuously calcine particulate material such that a continuous calcination process is provided.

Alternatively, the calcination gas may exit the industrial calciner 100 into the external environment via an exhaust outlet 112. A first valve 114 regulates the quantity of calcination gas exiting the industrial calciner 100 via the exhaust outlet 112 allowing the quantity of calcination gas recirculated to be controlled. The flow of calcination gas exiting the filter unit 111 is assisted by a second fan 117 located adjacent the filter unit 111. The second fan 117 assists the flow of calcination gas for both recirculation and emission to the external environment.

The gas supply system 105 also comprises a heat exchanger 118 configured to extract heat energy from the calcination gas leaving the calcination vessel 101. While a heat exchanger 118 is depicted in the present embodiment, the use of a heat pump is also envisaged either alone or in combination with a heat exchanger. The heat exchanger 118 is configured to heat at least a portion of the calcination gas before it enters the calcination vessel 101. In this way, the industrial calciner 100 has a lower resource demand and an improved efficiency as thermal energy is recovered and re-used.

The industrial calciner 100 comprises a pressure control system for controlling the pressure within the industrial calciner 100. The pressure control system comprises a pressure sensor PT located within the industrial calciner 100 to measure the pressure between the calcination gas entering the calcination vessel 101 and the calcination gas exiting the industrial calciner 100 via the exhaust outlet 112. The industrial calciner 100 is configured to control the pressure control system in response to the measurement of the pressure sensor PT.

The industrial calciner 100 further comprises a heating control system for controlling the output of the plurality of electric heaters 108. The heating control system comprises a temperature sensor TT located within the industrial calciner 100 configured to measure the temperature of the calcination gas exiting the calcination vessel 101. The heating control system comprises a computer processor configured to control the plurality of electric heaters 108 to maintain a heating parameter within a desired range, in part by controlling the electricity input to the plurality of electric heaters 108. The heating control system modifies the operation of at least one electric heater of the plurality of electric heaters 108 if the temperature measured by the temperature sensor TT falls outside of a desired range.

The industrial calciner 100 further comprises a humidity modifier and a humidity control system for controlling the output of the humidity modifier. The humidity control system comprises a humidity sensor located within the industrial calciner 100 configured to measure the humidity within the calcination vessel 101 and the humidity control system is configured to control the humidity modifier in response to the measurement of the humidity sensor. The humidity control system comprises a computer processor configured to control the humidity modifier to maintain a humidity parameter within a desired range and the humidity modifier can both increase and reduce the humidity within the industrial calciner 100.

Both the temperature control system and the humidity control system are configured to issue an alert if each of the temperature parameter and the humidity parameter respectively fall outside the desired ranges. The issuance of each alert is recorded within the temperature control system and the humidity control system respectively. In this way, the calcination conditions within the industrial calciner 100 can be monitored and a log of periods of unfavourable conditions is built.

The industrial calciner 100 further comprises an airflow control system for controlling the output of the humidity modifier. The airflow control system comprises a first airflow sensor FT located within the industrial calciner 100 to measure at least one characteristic of airflow of the calcination gas exiting the filter unit 111. The airflow control system further comprises a second airflow sensor FT' located within the industrial calciner 100 to measure at least one characteristic of airflow of the calcination gas entering the industrial calciner 100. The airflow control system is configured to control the airflow through the industrial calciner 100 in response to the measurement of the first airflow sensor FT and/or the second airflow sensor FT'.

In this way, pressure, temperature, humidity and airflow characteristics within the industrial calciner 100 can be more closely controlled and optimised calcination conditions can be provided. Controlled humidity of the calcination conditions within the calcination vessel 101 allows the industrial calciner 100 to operate over both a wider temperature and wider humidity range. Additionally, use of the plurality of electric heaters 108 improves the characteristics of the calcined gypsum particles as improved control and precision of the calcination conditions allows for optimisation of particle size as well as a reduction in under-calcination and over-calcination of the particulate matter.

## Claims

1. An industrial calciner for particulate material, wherein said industrial calciner comprises:
a calcination vessel; and
a gas supply system in fluid communication with said calcination vessel,
said gas supply system configured to supply a flow of calcination gas to said calcination vessel, wherein
said industrial calciner further comprises at least one electric heater configured to heat said calcination gas.

2. The industrial calciner of claim 1, wherein said at least one electric heater is located within said gas supply system.

3. The industrial calciner of claim 1 or claim 2, wherein said calcination vessel comprises a grinder for reducing the size of the particulate material.

4. The industrial calciner of any one preceding claim, wherein said gas supply system comprises a heat exchanger and/or heat pump configured to extract heat energy from the calcination gas leaving the calcination vessel.

5. The industrial calciner of claim 4, wherein said heat exchanger and/or heat pump is configured to heat at least a portion of the calcination gas before it enters the calcination vessel.

6. The industrial calciner of any one preceding claim, wherein said industrial calciner comprises a heating control system for controlling the output of the at least one electric heater, and preferably wherein said heating control system comprises at least one temperature sensor.

7. The industrial calciner of any one preceding claim, wherein said industrial calciner further comprises at least one humidity modifier.

8. The industrial calciner of claim 7, wherein said industrial calciner comprises a humidity control system for controlling the output of said at least one humidity modifier, and preferably wherein said humidity control system comprises at least one humidity sensor.

9. The industrial calciner of any one preceding claim, wherein said industrial calciner comprises a pressure control system for controlling the pressure within the industrial calciner, and preferably wherein said pressure control system comprises at least one pressure sensor.

10. The industrial calciner of any one preceding claim, wherein said industrial calciner comprises an airflow control system for controlling the airflow through the industrial calciner, and preferably wherein said airflow control system comprises at least one airflow sensor.

11. The industrial calciner of any one preceding claim, wherein said industrial calciner further comprises a filter unit, wherein said filter unit is configured to remove calcined particulate matter from said calcination gas.

12. The industrial calciner of any one preceding claim, wherein said industrial calciner is configured to recirculate at least a portion of said calcination gas.

13. The industrial calciner of any one preceding claim, wherein said industrial calciner comprises a plurality of electric heaters.

14. Use of the industrial calciner of any one preceding claim to calcine particulate material.

15. A method of calcining particulate material, the method comprising the steps of:
providing the industrial calciner of any one of claims 1 to 13;
providing gypsum;
placing the gypsum into said calcination vessel;
exposing the particulate material to heat from the at least one electric heater; and
calcining the particulate material.
